(19) 

Europäisches Patentamt
European Patent Office
Office européen des brevets

(11) **EP 1 191 620 B1**

(12) **EUROPÄISCHE PATENTSCHRIFT**

(45) Veröffentlichungstag und Bekanntmachung des Hinweises auf die Patenterteilung:
**18.12.2013 Patentblatt 2013/51**

(51) Int Cl.:
*H01M 8/04* (2006.01)   *H01M 8/06* (2006.01)
*G01N 33/00* (2006.01)   *G01R 31/36* (2006.01)

(21) Anmeldenummer: **01810834.0**

(22) Anmeldetag: **28.08.2001**

(54) **Verfahren zum Betreiben einer Brennstoffzellenbatterie**

Method for operating a fuel cell battery

Procédé pour faire fonctionner une batterie de piles à combustible

(84) Benannte Vertragsstaaten:
**AT BE CH CY DE DK ES FI FR GB GR IE IT LI LU MC NL PT SE TR**

(30) Priorität: **25.09.2000 EP 00810876**

(43) Veröffentlichungstag der Anmeldung:
**27.03.2002 Patentblatt 2002/13**

(73) Patentinhaber: **Hexis AG**
**8404 Winterthur (CH)**

(72) Erfinder:
• **Keller, Martin**
**8406 Winterthur (CH)**
• **Rüegge, Andreas**
**8408 Winterthur (CH)**

(74) Vertreter: **Sulzer Management AG**
**Patentabteilung / 0067**
**Zürcherstrasse 14**
**8401 Winterthur (CH)**

(56) Entgegenhaltungen:
**EP-A- 0 987 555     US-A- 3 812 024**

• **MATSUMURA S ET AL: "ESTIMATION OF OPEN VOLTAGE AND RESIDUAL VALUES FOR PB BATTERY BY ADAPTIVE DIGITAL FILTER" DENKI GAKKAI RONBUNSHI. C, DENSHI JOHOSHISUTEMU BUMONSHI /INSTITUTE OF ELECTRICAL ENGINEERS OF JAPAN. TRANSACTIONS. C;ELECTRONICS, INFORMATION AND SYSTEM SOCIETY PUBLICATION, OF JAPAN, TOKYO, Bd. 112C, Nr. 4, 1. Januar 1992 (1992-01-01), Seiten 259-267, XP008007300 ISSN: 0385-4221**
• **WARD C A ET AL: "Analytical method for determining the internal resistance and electrocatalyst utilization of fuel cells", JOURNAL OF POWER SOURCES, ELSEVIER SA, CH, vol. 66, no. 1-2, 1 May 1997 (1997-05-01), pages 83-88, XP004082305, ISSN: 0378-7753, DOI: DOI:10.1016/S0378-7753(96)02485-8**

EP 1 191 620 B1

**Beschreibung**

Die Erfindung betrifft ein Verfahren zum Betreiben einer Brennstoffzellenbatterie, insbesondere einer Batterie von Hochtemperatur-Brennstoffzellen. Sie bezieht sich auch auf eine Anlage mit einer Brennstoffzellenbatterie.

Hochtemperatur-Brennstoffzellen, beispielsweise des SOFC-Typs ("Solid Oxid Fuel Cell"), ermöglichen eine Nutzung der mit den Brennstoffzellen umgewandelten Energie beim Betrieb einer Gebäude-Infrastruktur (Energieversorgung, Heizung und/oder Klimatisierung). Es wird dabei die Energie in zwei Formen genutzt, nämlich als elektrische Energie, die aufgrund elektrochemischer Prozesse erzeugt wird, und als thermische Energie der heissen Abgasen, die bei den Prozessen entstehen. Der Betrieb einer Gebäude-Infrastruktur ist relativ komplex und macht daher ein Energiemanagement erforderlich. Teil eines solchen Energiemanagements ist eine Steuerung des Systems, das durch die Batterie sowie für deren Betrieb benötigte Hilfseinrichtungen gebildet ist. Diese Systemsteuerung, die ein Management der Brennstoffzellenbatterie darstellt, wird nachfolgend kurz mit "Stackmanagement" bezeichnet. Durch das Stackmanagement wird der Betriebspunkt festgelegt, bei dem die Batterie betrieben werden soll. Der geeignete Betriebspunkt, der durch eine maximal zulässige Stromstärke bzw. eine Minimalspannung charakterisierbar ist, hängt von verschiedenen Grössen ab: vom Massenstrom des Brennstoffs, vom Massenstrom der Luft, von der Temperatur der elektrochemischen Prozesse und vom qualitativen Zustand der Brennstoffzellen, dem sogenannten "Integritätszsustand".

Die Brennstoffzellenbatterie ist durch eine elektromotorische Kraft (oder "open circuit voltage" OCV) und einen inneren Widerstand $R_i$ characterisierbar. $R_i$ hängt von der Qualität der Batterie, d.h. deren Integritätszustand ab. Eine neue, funktionstüchtige Batterie weist einen guten Integritätszustand auf. Durch den Betrieb der Batterie ergeben sich Degradationen der elektrochemisch aktiven Komponenten, was eine Verschlechterung des Integritätszustands zur Folge hat. Der Integritätszustand hängt ausser von der Degradationen auch von weiteren Mängeln der Batterie ab. Solche Mängel sind: Risse in Elektrolytplatten, mangelhafte elektrische Kontakte, Beschichtungsfehler, Werkstofffehler und/oder Undichtigkeiten

Aus Dokument US 3 812 024 ist ein Steuerungsverfahren für eine Aluminium-Reduktionszelle bekannt, in dem die Zugabe von Aluminiumoxid mit Hilfe einer maximal zulässigen Abweichung $\Delta R^*$ des Innenwiderstand gesteuert wird, die vom Rauschen der Zelle abhängig ist.

Aufgabe der Erfindung ist es, ein Verfahren zum sicheren Betreiben einer Brennstoffzellenbatterie zu schaffen. Das Verfahren soll die Einstellung einer korrekten Belastung der Batterie ermöglichen, wobei mit dem Verfahren zu berücksichtigen ist, dass der Integritätszustand der Batterie s ch im Lauf der Zeit verschlechtert. Mit dem Verfahren muss ein vom Integritätszustand abhängiger Betriebspunkt bestimmt werden, bei dem ein zulässiger Maximalstrom nicht überschritten bzw. eine Mininialspannung nicht unterschritten wird. Diese Aufgabe wird durch das im Anspruch 1 definierte Verfahren gelöst.

Das Verfahren zum Betreiben einer Brennstoffzellenbatterie umfasst eine Analyse eines Integritätszustands der Batterie. Dieser Integritätszustand wird mittels Messen von Betriebsparametern und einer programmierten Auswertung der Messdaten bestimmt. Die Batterie wird zwecks sicherer Arbeitsweise so gesteuert, dass die maximale elektrische Aus gangsleistung einer vom Integritätszustand abhängigen Beschränkung unterworfen ist oder dass ein Unterbruch des Betrieb eingeleitet wird. Der Integritätszustand ist durch mindestens zwei Parameter, insbesondere ein Parameterpaar $c_j$, $d_j$ charakterisierbar. Aus einer die Parameter enthaltenden Beziehung ist einerseits ein innerer elektrischer Widerstand $R_i$ der Batterie berechenbar; andererseits ist eine Aussage über die Qualität der Batterie ableitbar. Gegenstand des abhängigen Anspruchs 2 ist ein Verfahren, das die Überwachung einer Nachverbrennung zwecks einer sicheren Arbeitsweise betrifft. Die abhängigen Ansprüche 3 bis 9 betreffen vorteilhafte Ausführungsformen des erfindungsgemässen Verfahrens. Anspruch 10 bezieht sich auf eine Anlage mit einer Brennstoffzellenbatterie.

Nachfolgend wird die Erfindung anhand von Zeichnungen und Beziehungen, die in den Figuren zusamengestellt sind, erläutert. Es zeigen:

Fig. 1 eine Batterie mit stapelartig angeordneten Brennstoffzellen,

Fig. 2 ein Blockdiagramm zu einer Anlage mit einer Batterie gemäss Fig. 1,

Fig. 3 Beziehungen zwischen dem inneren Widerstand der Batterie und der Brennstoffmenge, die in die Batterie eingespeist wird,

Fig. 4 Messkurven zu den Beziehungen der Fig. 3,

Fig. 5 eine Tabelle mit Werten eines Parameterpaars, das den Kurven der Fig. 4 zugeordnet ist,

Fig. 6 Beziehungen zum Bestimmen des genannten Parameterpaars und

Fig. 7 Beziehungen zur einer Bestimmung des Integritätszustands.

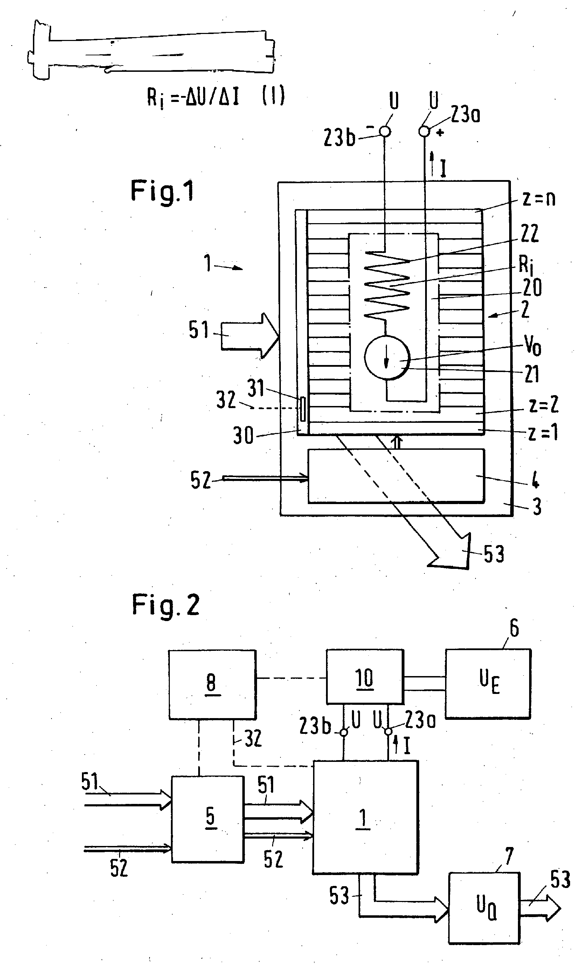

Die Brennstoffzellen-Batterie 1 der Fig. 1 umfasst einen Zellenstapel 2 (sogenannter "Stack"), mit n Zellen z = 1, 2, ... n. Der Stapel 2 ist in einer Hülle 3 eingeschlossen, die eine Wärmedämmung bildet. Unterhalb des Stapels 2 ist ein Prereformer 4 angeordnet, in dem ein als Brennstoff dienendes Gas 52 in eine für die elektrochemischen Prozesse geeignete Form umgewandelt wird. Sauerstoff, der in eingespeister Luft 51 enthalten ist, bildet ein weiteres Edukt der Prozesse. Im strichpunktiert dargestellten Rechteck ist ein elektrisches Ersatzbild 20 für den Stapel 2 angegeben, das eine elektromotorische Kraft 21 (= OCV = $V_0$), einen inneren Widerstand 22 (= $R_i$) und elektrische Pole 23a, 23b umfasst. Ein durch die Batterie erzeugter elektrischer Gleichstrom I und eine zwischen den Polen 23a, 23b liegende Spannung U hängen von einer angelegten Last ab. Eine Erhöhung der Last führt zu einer Vergrösserung von U und gleichzeitig zu einer Verkleinerung von I; das entsprechend Umgekehrte gilt für eine Erniedrigung der Last. Der Wert $R_i$ des inneren Widerstands 22 lässt sich als Differenzenquotient gemäss der Beziehung (I) in Fig. 1 aus einer Spannungsdifferenz und einer Stromstärkendifferenz berechnen, wobei diese Differenzen mittels Messungen von U bzw. I vor und nach einem kleinen Lastwechsel bestimmt werden können.

Die Hülle 3 umfasst einen Raum 30, in dem die Reaktionsgase 51 und 52 nach Durchtritt durch die Brennstoffzellen nachverbrannt werden. Mindestens ein Sensor 31 ist in diesem Nachverbrennungsraum 30 angeordnet, mit dem sich das Vorhandensein einer Flamme überwachen lässt. Der Sensor 31 ist über eine Leitung 32 an eine Steuerungseinrichtung 8 (Fig. 2) angeschlossen.

Die in Fig. 2 angegebene Anlage umfasst neben der Batterie 1 einen pneumatischen Regler 5 (ein sogenannter Gas-Multiblock) für die Luft 51 und das Gas 52. Die in der Batterie 1 erzeugten Energien werden Elektrizität-Verbrauchern 6 ($U_E$) und Wärme-Verbrauchern 7 ($U_Q$) zugeführt. Die Steuerungseinrichtung 8 wird zur Durchführung des erfindungsgemässen Verfahrens verwendet. Sie steht mit dem Regler 5, der Batterie 1 und einer Adaptionseinrichtung 10 in Verbindung. In der Adaptionseinrichtung 10 wird die von der Batterie 1 erzeugte elektrische Energie in eine für den Verbraucher 6 nutzbare Form umgewandelt. Diese Einrichtung 10 kann folgendes umfassen: einen Inverter, in dem Gleich- in Wechselstrom umgewandelt wird, Anschlüsse an eine elektrische Batterie und Messgeräte (nicht dargestellt). Eine Messung von $R_i$ ist unter Verwendung der Einrichtungen 8 und 10 durchführbar.

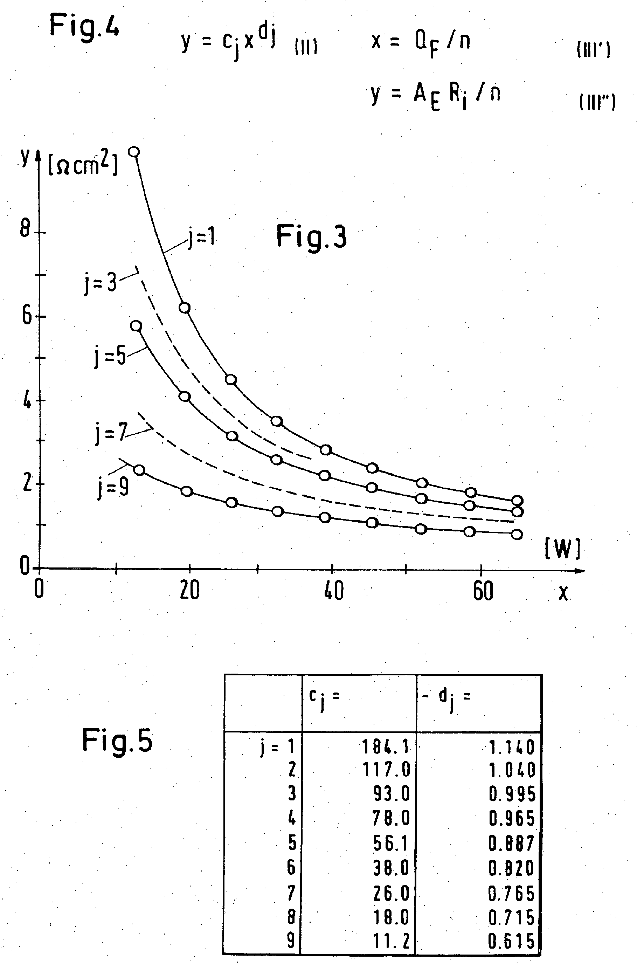

Die in den Figuren 3 und 4 angegebenen Variablen x und y haben folgende Bedeutung: x ist die Brennstoffenthalpie $Q_F/n$, die pro Zelle eingespeist wird ($Q_F$ = Brennwert mal Brennstoffmenge), siehe Beziehung (III'); y ist der pro Zelle bestehende innere Widerstand $R_i/n$, der mit einer aktiven Elektrodenfläche $A_E$ der Zelle multipliziert ist. Der innere Widerstand $R_i$ ist wegen Serieschaltung der Zellen proportional zur Anzahl n der Zellen und wegen Parallelschaltung der aktiven Flächenelemente der Zelle umgekehrt proportional zu $A_E$: vgl. Beziehung (III"). Der Proportionalitätsfaktor y ist von n und $A_E$ unabhängig. Es wird für y auch die Bezeichnung ASR ("area specific resistance") verwendet.

Das x-y-Diagramm der Fig. 4 zeigt eine Schar von Messkurven für ein Kollektiv von Brennstoffzellenbatterien, das ein breites Spektrum an verschiedenen Integritätszuständen aufweist, wobei den in das Diagramm aufgenommenen Kurven Integritätszustände j = 1, 3, 5, 7 und 9 zugeordnet sind. Die Kurven lassen sich durch eine Beziehung (II) gemäss Fig. 4 formelmässig ausdrücken. In diese Beziehung geht ein Parameterpaare $c_j$, $d_j$ ein, durch das der Integritätszustand j charakterisierbar ist. Die Werte von $c_j$ sind positiv, jene von $d_j$ negativ. In der Tabelle der Fig. 5 sind Werte für die Parameterpaare $c_j$, $d_j$ für neun Integritätszustände j = 1, ... 9 zusammengestellt. Je grösser der Index j ist, desto besser ist die Qualität der Batterie 1.

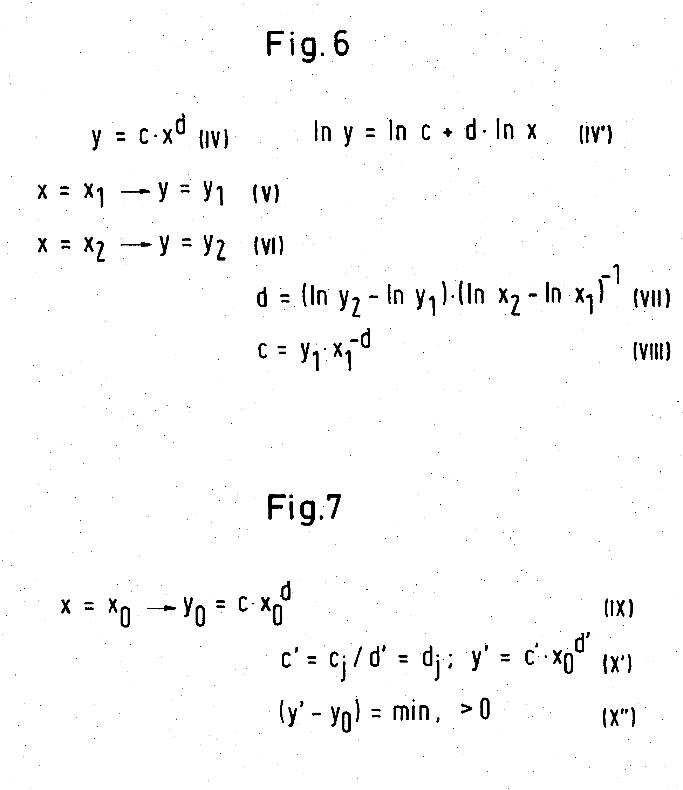

Beim Betrieb der Batterie 1 werden periodisch Diagnosemessungen durchgeführt. Mit den in Fig. 6 zusammengestellten Beziehungen (IV) bis (VIII) lassen sich aktuelle Werte eines Parameterpaars c, d - siehe Beziehung (IV) - bestimmen. Diesem Paar c, d, das mit der Diagnosemessung bestimmt worden ist, kann ein Parameterpaar $c_j$, $d_j$ der Tabelle in Fig. 5 zugeordnet werden. Eine Definition dieser Zuordnung ist in den Beziehungen (IX) und (X') zusammengefasst.

Die für das Stackmanagement vorzunehmenden Messungen und Berechnungen werden anschliessend in Abschnitten a) bis c) nochmals etwas ausführlicher besprochen:

a) Durch Messungen von $R_i$ für Batterien mit verschiedenen Integritätszuständen und bei Verwendung von $Q_F$ als Variablen gelangt man zu einer Relation zwischen x und y, die näherungsweise durch die Beziehung (II), Fig. 4, darstellbar ist und in die zwei Parameter c = $c_j$ und d = $d_j$ eingehen. Die Ermittlung von y(x) wird im folgenden Abschnitt b) beschrieben. Bei Vorgabe eines Wertes von x lässt sich zu dem Parameterpaar $c_j$, $d_j$ einerseits ein innerer Widerstand $R_i$ berechnen; andererseits ist mit dem Parameterpaar $c_j$, $d_j$ ein Integritätszustand j der Batterie charakterisiert. Den verschiedenen Integritätszuständen j entspricht eine Kurvenschar, die teilweise in Fig. 3 abgebildet ist. Werte für das Parameterpaar $c_j$, $d_j$ sind in der Tabelle der Fig. 5 zusammengestellt.

b) Zur Ermittlung von y(x) durch Messungen an dem Kollektiv von Batterien, deren Integritätszustände j verschieden sind, geht man folgendermassen vor:

b1) Es wird ein x eingestellt, wobei 10 W < x < 70 W; U = V1 wird ebenfalls eingestellt. Es wird I gemessen und der Wert I = I1 erhalten;
b2) x wird unverändert gelassen; U = V2 wird eingestellt. Es wird I gemessen: I = I2
b3) Es wird die Zuordnung x → y(x) durch Berechnen folgender Beziehung bestimmt:

$$y(x) = - (v1-v2)/(i1-i2),$$

mit $v1 = V1/n$, $v2 = V2/n$, $i1 = 11/A_E$ und $i2 = I2/A_E$. Die Kurvenschar der Fig. 3 wurde gemäss den Punkten b1) bis b3) bestimmt; dabei betrug die Anzahl n der Zellen 50; für die Spannung U wurden die Wert $V1 = 37.5$ V und $V2 = 35$ V eingestellt.

c) Die Ermittlung des Parameterpaars c, d erfolgt durch Messungen an einer Batterie und Festlegung eines "konservativen" Parameterpaars $c_j$, $d_j$ mittels folgendem Vorgehen (vgl. Beziehungen (V) bis (VIII) und Beziehungen (IX) bis (X'') in den Figuren 6 bzw. 7):

    c1) Es werden die oben angeführten Punkte b1) bis b3) ausgeführt und zwar für $x = x_1$ (32.5W). Man erhält $y(x_1) = y_1$: siehe Beziehung (V).

    c2) Es werden die Punkte b1) bis b3) für $x = x_2$ (45 W) ausgeführt. Das Ergebnis ist $y(x_2) = y_2$: siehe Beziehung (VI).

    c3) Es werden d und c nach den Beziehungen (VII) und (VIII) berechnet.

    c4) Für die erhaltenen Werte c und d, ausserdem mit $x = x_0$ (30 W) und der Beziehung (IX), lässt sich nun $y = y_0$ berechnen. $x_0$ ist ein mittlerer Wert für die Brennstoffmenge, die pro Sekunde einer Zelle zugeführt wird.

    c5) Es werden die Parameter $c_j$, $d_j$ für $x = x_0$ (30 W) mittels den Beziehungen (IX), (X'), (X'') festgelegt. Dabei wird ein Wertepaar c', d' in der Tabelle der Fig. 5 gesucht, für das ein mit der Beziehung (X') berechnetes y' die kleinste positive Differenz zu $y_0$ bildet.

Falls die Beziehung (X'') nicht erfüllbar ist, d.h. wenn es kein Wertepaar $c_j$, $d_j$ gibt, für welches das Minimum der Beziehung (X'') grösser als Null ist, dann ist der Integritätszustand der Batterie ungenügend. Durch die Beziehung (X'') ist also gleichzeitig ein Test der Batterie gegeben, aufgrund dem entschieden werden kann, ob der Betrieb fortgesetzt werden soll. Das Stackmanagement soll daher die Meldung "Stackwechsel" anzeigen.

Der Integritätszustand der Batterie ist durch das Parameterpaar c, d gemäss Punkt c3) charakterisierbar. Jedem Zustand entspricht eine für den Betrieb optimale Spannung U bzw. Stromstärke I. Dabei gilt

$$I = (V_0 - U)/R_i \text{ mit } V_0 = n\ 0.87 \text{ V (OCV)},$$

falls der Luftüberschuss ausreichend ist (Luftzahl $\lambda > 1.5$).

Die Spannung eines optimalen Betriebs ist grösser als die Spannung $0.5\ V_0$, bei der eine maximale Leistungsabgabe möglich wäre. Denn bei der maximalen Leistungsabgabe, die mit einer maximalen Stromstärke verbunden ist, ergibt sich wegen intensiven Elektrodenreaktionen eine hohe Degradation der Zelle. Für Betriebszustände der Batterien, die bei den oben genannten Messungen verwendet worden sind und die hinsichtlich der Zelldegradation und der Leistungsentnahme als optimal angesehen werden können, sind folgende Spannungen U zuzulassen:

    für $x = 52$ W (d.h. hohe Leistung): $U/n = 0.55$ V
    für $x = 13$ W (d.h. tiefe Leistung): $U/n = 0.6$ V
    für $13$ W $< x < 52$ W: linear interpolierter Wert für $U/n$.

Es soll periodisch der Integritätszustand der Batterie bestimmt werden, wobei ein Integritätszustand j mit im Steuerungsprogramm abgespeicherten Werten des Parameterpaars $c_j$, $d_j$ (Fig.5) ausgewählt wird. Bezüglich diesem Integritätszustand j wird die Steuerung neu festgelegt: siehe Abschnitt c). Es erfolgt eventuell die Meldung "Stackwechsel"; trotzdem soll der Betrieb noch während einer vorgebbaren Dauer fortgesetzt werden (mit j = 1).

Die quantitativen Angaben, beispielsweise die Werte für das Parameterpaar $c_j$, $d_j$, die bei der Beschreibung des erfindungsgemässen Verfahrens angegeben worden sind, hängen von den Brennstoffzellen haben. Bei einer anderen Wahl von Brennstoffzellen ergeben sich andere quantitative Verhältnisse. Es sind daher die offenbarten Zahlen lediglich als Beispiel zu verstehen.

Es gibt auch andere Vorgehensweisen, wie der Integritätszustand festgestellt und die Systemsteuerung des Stackmanagements eingestellt werden kann. Bei einer solchen alternativen Vorgehensweisen tritt der Wirkungsgrad der Brennstoffzelle oder Batterie (= $R_i\ I^2\ /Q_F$) an die Stelle von y. Für diesen Wirkungsgrad lässt sich eine zur Beziehung (II) entsprechende Beziehung bestimmen, der ein anderes Parameterpaar zugeordnet ist. Beim Wirkungsgrad besteht das Kriterium, dass dieser einen vom Integritätszustand abhängigen Wert (= "zulässiger Wirkungsgrad") nicht überschreiten darf. Die Systemsteuerung muss so gestaltet sein, dass dieses Kriterium entweder erfüllt wird oder der Betrieb unterbrochen wird.

Für ein sicheres Funktionieren der Brennstoffzellenbatterie ist auch eine Überwachung einer Nachverbrennung wichtig. Die Batterie 1 umfasst den Raum 30, in dem die Reaktionsgase 51, 52 nach Durchtritt durch die Brennstoffzellen nachverbrannt werden. Ein in diesem Raum 30 angeordneter Sensor 31 wird verwendet, um das Vorhandensein einer Flamme zu überwachen. Ein Messsignal entsteht bei einer Anwesenheit der Flamme. Aufgrund von physikalischen Eigenschaften der Flamme, insbesondere einer Erzeugung von Wärme bei der Flammtemperatur oder einer Emission von Photonen, wird im Sensor das Messsignal hervorgerufen.

Die Überwachung der Temperatur im Nachverbrennungsraum 30 kann mit einem Thermogenerator 31 durchgeführt werden. Der Thermogenerator 31 ist ein Thermoelement, dessen erzeugtes Signal über eine Verbindung 32 der Steuerungseinrichtung 8 übermittelt und dort elektronisch ausgewertet wird. Oder der Thermogenerator 31 ist eine Serieschaltung mit einer Vielzahl von Thermoelementen, die eine ausreichend grosse elektrische Leistung erzeugen, um beispielsweise ein Ventil oder ein Relais betätigen zu können. Das Ausbleiben dieser elektrischen Leistung kann zu einer Einleitung eines Betriebsabbruchs und/oder zu einer eigensicheren Überwachung des Sensors genutzt werden.

Bei der Verbrennung von Wasserstoff werden UV-Photonen emittiert. Die Überwachung der Nachverbrennung kann daher auch mittels einer UV-Sonde 31 durchgeführt werden. Es bestehen weitere Möglichkeiten, um die Verbrennungsüberwachung durchzuführen: Mit einem CO-Sensor im Abgasstrom, der je nach gemessener CO-Konzentration auf das Vorliegen einer Verbrennung schliessen lässt. Oder ein Sensor im Nachverbrennungsraum 30, mit welchem sich wie bei Standardverfahren für Brenner die Ionisation in den Verbrennungsgasen messen lässt.

## Patentansprüche

1. Verfahren zum Betreiben einer Brennstoffzellenbatterie (1), welche einen Integritätszustand hat, wobei das Verfahren berücksichtigt, dass der Integritätszustand sich im Lauf der Zeit verschlechtert, indem mittels Messen von Betriebsparametern (x, y) und programmierter Auswertung der Messdaten der Integritätszustand der Batterie bestimmt wird und die Batterie zwecks sicherer Arbeitsweise so gesteuert wird, dass die maximale elektrische Ausgangsleistung einer vom Integritätszustand abhängigen Beschränkung unterworfen wird oder ein Unterbruch des Betriebs eingeleitet wird, wobei der Integritätszustand durch mindestens zwei Parameter ($c_j$, $d_j$) und aus einer die Parameter ($c_j$, $d_j$) und Betriebsparameter (x, y) enthaltenden Beziehung (II) charakterisiert wird, so dass aus der Beziehung (II) einerseits ein innerer elektrischer Widerstand ($R_i$) der Batterie berechenbar ist und andererseits eine Aussage über die Qualität (j) der Batterie ableitbar ist.

2. Verfahren nach Anspruch 1, **dadurch gekennzeichnet, dass** die Batterie einen Raum (30) umfasst, in dem Reaktionsgase (51, 52) nach Durchtritt durch die Brennstoffzellen nachverbrannt werden, und dass mindestens ein Sensor (31) in diesem Raum verwendet wird, um das Vorhandensein einer Flamme zu überwachen, wobei aufgrund von physikalischen Eigenschaften der Flamme, insbesondere einer Erzeugung von Wärme bei der Flammtemperatur oder einer Emission von Photonen, im Sensor ein Messsignal hervorgerufen wird.

3. Verfahren nach Anspruch 1 oder 2, **dadurch gekennzeichnet, dass** eine mathematische Beziehung (II) besteht zwischen dem inneren Widerstand ($R_i$) und einer Menge an Brennstoff ($Q_F$), die in die Batterie eingespeist wird, und dass ein Parameterpaar $c_j$, $d_j$ als Proportionalitätsfaktor bzw. als Exponent in diese Beziehung eingehen.

4. Verfahren nach einem der Ansprüche 1 bis 3, **dadurch gekennzeichnet, dass** mittels periodisch durchgeführten Diagnosemessungen sowie Durchführung von digitalen Berechnungen (IV - X") aktuelle Werte des Parameterpaars $q$, $d_j$ bestimmt werden und dass aufgrund dieser Werte die Steuerung der Batterie gegebenenfalls angepasst wird oder dass je nach Integritätszustand eine Meldung angezeigt wird, dass ein Austausch der Brennstoffzellen erforderlich sei.

5. Verfahren nach Anspruch 4, **dadurch gekennzeichnet, dass** anhand eines Kollektivs von Batterien (1), das ein breites Spektrum an verschiedenen Integritätszuständen (j) aufweist, eine Tabelle von Werten für das Parameterpaar $c_j$, $d_j$ bestimmt wird und dass diese Werte anstelle von den durch die Diagnosemessungen bestimmten Werten bei der Steuerung verwendet werden, wobei eine minimale Abweichung der Ergebnisse der Diagnosemessung mittels eines vorgegebenen Kriteriums (IX - X") angestrebt wird.

6. Verfahren nach Anspruch 5, **dadurch gekennzeichnet, dass** für den Fall, dass die minimale Abweichung gemäss dem vorgegebenen Kriterium (IX - X") nicht existiert, durch die Systemsteuerung (8) eine Aufforderung zum Unterbruch des Betriebs gemeldet wird.

7. Verfahren nach einem der Ansprüche 2 bis 6, **dadurch gekennzeichnet, dass** die Überwachung der Nachverbrennung mittels eines Thermogenerators (31) durchgeführt wird.

8. Verfahren nach einem der Ansprüche 2 bis 6, **dadurch gekennzeichnet, dass** die Überwachung der Nachverbrennung mittels einer UV-Sonde (31) oder einer Ionisationsmessung durchgeführt wird.

9. Verfahren nach einem der Ansprüche 2 bis 6, **dadurch gekennzeichnet, dass** die Überwachung der Nachverbrennung mittels eines im Abgasstrom angeordneten CO-Sensors durchgeführt wird.

10. Anlage mit einer Brennstoffzellenbatterie (1), in der das Verfahren gemäss einem der Ansprüche 1 bis 9 angewendet wird, **gekennzeichnet durch** eine Steuerungseinrichtung (8) und eine Adaptionseinrichtung (10) eingerichtet zum Durchführen des Verfahrens.

**Claims**

1. A method for operating a fuel cell battery (1), which has an integrity state, wherein the method takes account of the deterioration of the integrity state over time, in that the integrity state of the battery is determined by means of measurement of operating parameters (x, y) and programmed evaluation of the measurement data and the battery is controlled for the purpose of reliable operation in such a manner that the maximum electrical output power is subjected to a limitation which is dependent on the integrity state or an interruption of the operation is initiated, with the integrity state being characterizable by at least two parameters ($c_j$, $d_j$) and by a relationship (II) including the parameters ($c_j$, $d_j$) and operating parameters (x, y), so that from the relationship (II) an internal electrical resistance ($R_i$) of the battery can be calculated, on the one hand, and a statement on the quality (j) of the battery can be derived, on the other hand.

2. A method in accordance with claim 1, **characterized in that** the battery comprises a chamber (30) in which reaction gases (51, 52) are burned after passage through the fuel cells; and **in that** at least one sensor (31) is used in this chamber in order to monitor the presence of a flame, with a measurement signal being produced in the sensor as a result of physical properties of the flame, in particular of a production of heat at the flame temperature or an emission of photons.

3. A method in accordance with claim 1 or claim 2, **characterized in that** a mathematical relationship (II) exists between the internal resistance ($R_i$) and an amount of fuel ($Q_F$) which is fed into the battery; and **in that** one parameter pair $c_j$, $d_j$ enters into this relationship as a proportionality factor or as an exponent respectively.

4. A method in accordance with any one of the claims 1 to 3, **characterized in that** current values of the parameter pair $c_j$, $d_j$ are determined by means of periodically carried out diagnostic measurements and of carrying out digital computations (IV - X"); and **in that** as a result of these values the control of the battery is adapted where appropriate; or **in that** depending on the integrity state a message is displayed that a replacement of the fuel cells is required.

5. A method in accordance with claim 4, **characterized in that** a table of values of the parameter pair $c_j$, $d_j$ is determined on the basis of a collective of batteries (1) having a broad spectrum of different integrity states (j); and **in that** these values are used in the control instead of the values which are determined by the diagnostic measurement, with a minimum deviation of the results of the diagnostic measurement being aimed for by means of a predetermined criterion (IX - X").

6. A method in accordance with claim 5, **characterized in that** a request for the interruption of the operation is reported by the system control (8) in the event that the minimum deviation in accordance with the predetermined criterion (IX - X") does not exist.

7. A method in accordance with any one of the claims 2 to 6, **characterized in that** the monitoring of the afterburning is carried out by means of a thermogenerator (31).

8. A method in accordance with any one of the claims 2 to 6, **characterized in that** the monitoring of the afterburning is carried out by means of a UV probe (31) or an ionization measurement.

9. A method in accordance with any one of the claims 2 to 6, **characterized in that** the monitoring of the afterburning is carried out by means of a CO sensor which is arranged in the exhaust gas flow.

10. A plant with a fuel cell battery (1), in which the method in accordance with any one of the claims 1 to 9 is used, **characterized by** a control device (8) and an adaptation device (10) for carrying out the method.

**Revendications**

1. Procédé pour faire fonctionner une batterie de piles à combustible (1) qui a un état d'intégrité, le procédé prenant en considération le fait que l'état d'intégrité se détériore au fil du temps par le fait que, au moyen de la mesure de paramètres de fonctionnement (x, y) et d'une analyse programmée des données de mesure, l'état d'intégrité de la batterie est défini, et par le fait que la batterie est, pour un mode de travail sûr, commandée de telle sorte que la puissance de sortie électrique maximale est soumise à une limitation qui est fonction de l'état d'intégrité ou une interruption du fonctionnement est mise en oeuvre, l'état d'intégrité étant **caractérisé par** au moins deux paramètres ($c_j$, $d_j$) et à partir d'une relation (II) contenant les paramètres ($c_j$, $d_j$) et paramètres de fonctionnement (x, y) de telle sorte que, d'une part, une résistance électrique interne ($R_i$) peut être calculée à partir de la relation (II) et, d'autre part, une assertion sur la qualité (j) peut être dérivée.

2. Procédé selon la revendication 1, **caractérisé en ce que** la batterie comprend un espace (30) dans lequel des gaz de réaction (51, 52) font, après la traversée des piles à combustible, l'objet d'une postcombustion, et **en ce qu'**au moins un capteur (31) est utilisé dans cet espace pour surveiller la présence d'une flamme, un signal de mesure étant suscité dans le capteur sur la base de propriétés physiques de la flamme, en particulier d'une production de chaleur en présence de la température de flamme ou d'une émission de photons.

3. Procédé selon la revendication 1 ou 2, **caractérisé en ce qu'**il existe une relation (II) mathématique entre la résistance interne ($R_i$) et une quantité de combustible ($Q_F$) qui est introduite dans la batterie, et **en ce qu'**une paire de paramètres $c_j$, $d_j$ entrent dans cette relation en tant que facteur de proportionnalité ou respectivement en tant qu'exposant.

4. Procédé selon une des revendications 1 à 3, **caractérisé en ce que**, au moyen de mesures de diagnostic effectuées périodiquement ainsi qu'au moyen de la réalisation de calculs numériques (IV - X"), des valeurs actuelles de la paire de paramètres $c_j$, $d_j$ sont définies, et **en ce que**, sur la base de ces valeurs, la commande de la batterie est éventuellement adaptée ou **en ce que**, en fonction de l'état d'intégrité, il est affiché un message indiquant qu'un remplacement des piles à combustible est nécessaire.

5. Procédé selon la revendication 4, **caractérisé en ce que**, à l'aide d'un collectif de batteries (1) qui présente un large éventail d'états d'intégrité (j) différents, un tableau de valeurs est défini pour la paire de paramètres $c_j$, $d_j$, et **en ce que** ces valeurs sont utilisées lors de la commande à la place des valeurs définies par les mesures de diagnostic, une divergence minimale des résultats de la mesure de diagnostic étant recherchée au moyen d'un critère prédéfini (IV - X").

6. Procédé selon la revendication 5, **caractérisé en ce que**, dans le cas où la divergence minimale selon le critère prédéfini (IV - X") n'existe pas, une invitation à interrompre le fonctionnement est signalée par la commande du système (8).

7. Procédé selon une des revendications 2 à 6, **caractérisé en ce que** la surveillance de la postcombustion est effectuée au moyen d'un générateur thermique (31).

8. Procédé selon une des revendications 2 à 6, **caractérisé en ce que** la surveillance de la postcombustion  est effectuée au moyen d'une sonde UV (31) ou d'une mesure d'ionisation.

9. Procédé selon une des revendications 2 à 6, **caractérisé en ce que** la surveillance de la postcombustion est effectuée au moyen d'un capteur de CO disposé dans le flux des gaz de combustion.

10. Installation avec une batterie de piles à combustible (1) dans laquelle le procédé selon une des revendications 1 à 9 est utilisé, **caractérisée par** un dispositif de commande (8) et un dispositif d'adaptation (10) aménagés pour la réalisation du procédé.

$$R_i = -\Delta U / \Delta I \quad (1)$$

## Fig.1

## Fig.2

**Fig.4**

$$y = c_j x^{d_j} \quad \text{(III)} \qquad x = Q_F / n \qquad \text{(III')}$$

$$y = A_E R_i / n \qquad \text{(III'')}$$

**Fig.3**

$y$ $[\Omega\,cm^2]$

$j=1$

$j=3$

$j=5$

$j=7$

$j=9$

$[W]$

$x$

**Fig.5**

|  | $c_j =$ | $- d_j =$ |
|---|---|---|
| $j = 1$ | 184.1 | 1.140 |
| 2 | 117.0 | 1.040 |
| 3 | 93.0 | 0.995 |
| 4 | 78.0 | 0.965 |
| 5 | 56.1 | 0.887 |
| 6 | 38.0 | 0.820 |
| 7 | 26.0 | 0.765 |
| 8 | 18.0 | 0.715 |
| 9 | 11.2 | 0.615 |

## Fig. 6

$$y = c \cdot x^d \quad \text{(IV)} \qquad \ln y = \ln c + d \cdot \ln x \quad \text{(IV')}$$

$$x = x_1 \longrightarrow y = y_1 \quad \text{(V)}$$

$$x = x_2 \longrightarrow y = y_2 \quad \text{(VI)}$$

$$d = (\ln y_2 - \ln y_1) \cdot (\ln x_2 - \ln x_1)^{-1} \quad \text{(VII)}$$

$$c = y_1 \cdot x_1^{-d} \quad \text{(VIII)}$$

## Fig. 7

$$x = x_0 \longrightarrow y_0 = c \cdot x_0^d \quad \text{(IX)}$$

$$c' = c_j / d' = d_j \, ; \quad y' = c' \cdot x_0^{d'} \quad \text{(X')}$$

$$(y' - y_0) = \min , \; > 0 \quad \text{(X'')}$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3812024 A